# FASCICULE DE BREVET EUROPEEN

(11) **EP 2 102 515 B1**
(45) Date de publication et mention de la délivrance du brevet: **29.06.2011**
(21) Numéro de dépôt: 08761906.0
(22) Date de dépôt: 08.01.2008
(51) Int. Cl.: F16C 33/66

(54) **PROCEDE ET DISPOSITIF PYROTECHNIQUES AUTONOMES D'INJECTION D'UN FLUIDE**
UNABHÄNGIGE PYROTECHNISCHE VERFAHREN UND VORRICHTUNG ZUR INJEKTION EINER FLÜSSIGKEIT
AUTONOMOUS PYROTECHNICAL METHOD AND DEVICE FOR INJECTING A FLUID

(30) Priorité: 10.01.2007 FR 0752609
(43) Date de publication de la demande: 23.09.2009
(73) Titulaire: SNPE Matériaux Energétiques, 75004 Paris (FR)
(72) Inventeur: GAUTHIER, Corinne, F-91540 Fontenay le Vicomte (FR); YVART, Pierre, F-91710 Vert-le-Petit (FR); BLARASIN, Laurent, F-77870 Vulaines Sur Seine (FR)
(74) Mandataire: Le Roux, Martine
(86) Numéro de dépôt international: PCT/FR2008/050030
(87) Numéro de publication internationale: WO 2008/107579

(56) Documents cités:
- US-A- 5 881 819

## Description

La présente invention concerne un procédé et un dispositif d'injection autonome d'un fluide faisant intervenir des moyens pyrotechniques. Elle concerne plus particulièrement un procédé et un dispositif d'injection autonome d'un fluide de sauvegarde, de protection ou de maintenance préventive conditionnelle, dans des contextes d'échauffements.

Durant ces dernières années, l'usage de la thermo-initiation s'est étendu à des domaines recouvrant tant la sécurité automobile et la sécurité au transport des marchandises dangereuses que la sécurité électrique et l'extinction d'incendie. Dans les domaines de la sécurité automobile et de la sécurité au transport des marchandises dangereuses, la thermo-initiation permet de neutraliser des dispositifs, placés dans des conditions accidentelles, avant qu'ils n'explosent ou produisent des effets inattendus (FR 2 870 234 et US 5,253,895). Dans le domaine de la sécurité électrique et le domaine de l'extinction d'incendie, l'utilisation d'un fusible pyrotechnique est courante pour déclencher un événement, tel que l'interruption d'un courant électrique d'un circuit en surchauffe (US 6,515,570), ou encore l'ouverture d'une bouteille de gaz sous pression (US 5,881,819).

Par ailleurs, des dispositifs pyrotechniques sont connus pour actionner un vérin ou une seringue, ou encore pressuriser un réservoir. Ces dispositifs sont notamment appliqués au domaine de la sécurité automobile (EP 1 486 697), de l'extinction d'incendie (EP 0 956 883 ; EP 1 609 507) et au domaine médical (FR 2 852 516). Au sein de tels dispositifs, l'allumage d'une charge pyrotechnique est déclenché par des commandes mécaniques, électriques ou radiatives.

Divers dispositifs d'injection de fluides de refroidissement, de fluides de graissage ou d'autres fluides de sauvegarde, dans des systèmes sujets à des échauffements, ont été développés. Ces dispositifs fonctionnent :
- soit de manière manuelle, par exemple dans le contexte de l'injection de sprays de refroidissement pour les circuits électroniques et l'informatique ;
- soit avec l'intervention de détecteurs de réaction (EP 1,376,720) ou de capteurs de température et/ou de pression (FR 2,857,693). De tels dispositifs présentent des structures relativement complexes ;
- soit de manière autonome. Des dispositifs autonomes d'injection de fluide de sauvegarde sont basés sur des propriétés de dilatation de fluide, tel que le mercure, qui, en se dilatant sous la chaleur, pousse un fluide de sauvegarde dans un système soumis à des échauffements (US 1,570,873). Pour ce genre de dispositifs, le temps de réponse entre le moment de la détection d'échauffements du système et le moment de l'injection du fluide de sauvegarde n'est pas satisfaisant.

Enfin, il faut bien distinguer les dispositifs de l'invention (voir ci-après) des graisseurs automatiques de maintenance et d'entretien appliqués aux domaines mécaniques. Ces graisseurs fonctionnent sur le principe d'une génération de gaz programmée par cellule électrochimique venant peu à peu pousser le piston d'une seringue. Ils sont conçus pour délivrer un graissage continu ou périodique sur une durée de 1 à 12 mois. Leur délai de mise en régime peut atteindre une semaine.

Dans un tei contexte, l'invention propose un procédé d'injection autonome d'un fluide aisé à mettre en oeuvre et un dispositif d'injection autonome d'un fluide, convenant à la mise en oeuvre dudit procédé, de conception simple. La présente invention propose, notamment, dans son large cadre, un procédé permettant d'injecter rapidement un fluide de sauvegarde, de protection ou de maintenance préventive conditionnelle dans un système, en cas d'échauffements dans ledit système, et le dispositif associé audit procédé. Les procédé et dispositif selon l'invention présentent l'avantage d'être utilisables à l'échelle industrielle, de manière sûre et fiable, à l'instar des applications airbags en sécurité automobile. Ils bénéficient par ailleurs de la souplesse de réglage et du savoir-faire acquis dans le domaine de la pyrotechnie spatiale. Selon les besoins, il est possible de régler la durée d'injection, de quelques millisecondes à plusieurs secondes.

Selon son premier objet, l'invention concerne donc un procédé d'injection autonome d'un fluide comprenant :
- la thermo-initiation et la combustion d'au moins une charge pyrotechnique thermo-initiable génératrice de gaz;
- la génération de gaz de combustion, lesdits gaz consistant en ceux résultant de ladite combustion de ladite au moins une charge pyrotechnique thermo-initiable génératrice de gaz, ou consistant en ceux résultant de ladite combustion de ladite au moins une charge pyrotechnique thermo-initiable génératrice de gaz et de la combustion d'au moins un chargement pyrotechnique initié en combustion par ladite au moins une charge pyrotechnique thermo-initiable;
- la pressurisation dudit fluide sous l'action desdits gaz de combustion ;
- la délivrance dudit fluide pressurisé.

Ce procédé original d'injection est simple à mettre en oeuvre. Il s'agit d'un procédé pyrotechnique qui fonctionne de manière autonome, sans liaison avec une source d'énergie ou un élément mécanique extérieur au système à protéger dans un contexte de protection d'un système (voir plus loin). Il ne fait notamment intervenir aucune commande extérieure de nature mécanique, électrique ou radiative. De façon caractéristique, la thermo-initiation est utilisée dans le cadre du procédé revendiqué, pour l'injection d'un fluide sous l'action de gaz pyrotechniques, générés lors du fonctionnement normal d'un générateur pyrotechnique. Ainsi, ledit fluide est-il injecté à une température prédéterminée, celle qui a déclenché la combustion de la au moins une charge pyrotechnique thermo-initiable en cause.

Le fluide à injecter peut notamment consister en un liquide, une émulsion, un gel, une graisse ou une pâte, éventuellement chargé(e) d'agents solides tels que des poudres. Ledit fluide peut également consister en un mélange de plusieurs fluides de nature différente ; notamment en un mélange d'au moins deux fluides choisis parmi ceux listés ci-dessus.

L'homme du métier connaît la nature de charges pyrotechniques thermo-initiables pouvant être utilisées dans un tel procédé et les gammes de température auxquelles la thermo-initiation peut alors se dérouler. Des charges pyrotechniques thermo-initiables génératrices de gaz (*per se*) ont notamment été décrites dans les documents brevets US 6,221,187, US 6,101,947, US 5,959,242, US 5,739,460, US 5,866,842 et FR 2 870 234. D'autres charges pyrotechniques thermo-initiables, qualifiées de thermites, ne générant pas de gaz mais seulement de la chaleur, peuvent être utilisées pour amorcer la combustion d'au moins une charge pyrotechnique qui est elle génératrice de gaz. De tels matériaux (charges thermites) ont notamment été décrits dans le document brevet US 5,035,756. Par charge pyrotechnique thermo-initiable génératrice de gaz, on entend donc dans la présente description et les revendications annexées, une charge pyrotechnique thermo-initiable génératrice de gaz *per se* ou une charge pyrotechnique thermo-initiable thermite associée à une charge pyrotechnique génératrice de gaz.

Avantageusement, la combustion de la charge pyrotechnique thermo-initiable est initiée à une température prédéterminée comprise entre 80°C et 270°C. Le procédé de l'invention peut ainsi notamment répondre à des exigences de fonctionnement à basse température par rapport à celles rencontrées dans des situations d'incendie.

La génération de gaz de combustion résulte principalement de deux variantes possibles de mise en oeuvre. Selon une première variante, elle provient uniquement de la combustion d'au moins une charge pyrotechnique thermo-initiable génératrice de gaz (charge pyrotechnique thermo-initiable génératrice de gaz = une telle charge génératrice de gaz *per se* ou l'association d'une charge thermite et d'une charge pyrotechnique génératrice de gaz); selon une deuxième variante, elle provient de la combustion d'au moins une charge pyrotechnique thermo-initiable génératrice de gaz (charge pyrotechnique thermo-initiable génératrice de gaz = une telle charge génératrice de gaz *per se* ou l'association d'une charge thermite et d'une charge pyrotechnique génératrice de gaz) et de celle d'au moins un chargement pyrotechnique initié en combustion par ladite au moins une charge pyrotechnique thermo-initiable. La deuxième variante peut faire intervenir au moins une charge pyrotechnique additionnelle placée entre ladite au moins une charge pyrotechnique thermo-initiable et ledit au moins un chargement pyrotechnique. Dans ce cas de figure, la combustion dudit au moins un chargement pyrotechnique est initiée par ladite au moins une charge pyrotechnique thermo-initiable *via* ladite au moins une charge pyrotechnique additionnelle qui joue alors le rôle de relais d'allumage.

Les gaz, générés suite à la combustion de la totalité des charges pyrotechniques présentes, pressurisent le fluide à injecter, et ce, jusqu'à atteindre une pression telle que leur action permette la délivrance du fluide pressurisé, généralement après déchirement d'au moins un élément d'étanchéité (qui a permis la montée en pression), qui assure alors la fonction de moyen de délivrance. Ledit fluide est en effet généralement délivré lorsqu'au moins un opercule, en film plastique ou métallique, frangible, cède en se déchirant, avantageusement sans fragment, sous l'effort de pressurisation.

Afin de contrôler l'injection (son déclenchement et son déroulement), plusieurs paramètres peuvent être optimisés, notamment :
- la forme sous laquelle se présente(nt) le(les) matériau(x) pyrotechnique(s) utilisé(s). La charge pyrotechnique thermo-initiable (= charge génératrice de gaz *per se* ou charge thermite associée à une charge pyrotechnique génératrice de gaz) et/ou la charge pyrotechnique additionnelle (si elle intervient) et/ou le chargement pyrotechnique (s'il intervient) peut ou peuvent se trouver sous la forme de poudre(s) et/ou de granulés et/ou de grains et/ou de bloc(s) ;
- la composition du(des) matériau(x) pyrotechnique(s) utilisé(s) ; la composition de la charge pyrotechnique thermo-initiable étant principalement choisie en fonction de la température d'initiation souhaitée. Ladite charge pyrotechnique thermo-initiable et/ou la charge pyrotechnique additionnelle (si elle intervient) et/ou le chargement pyrotechnique (s'il intervient) correspond(ent) généralement à une ou des composition(s) de classe de risque 1.1 ou 1.3, en particulier à une(des) composition(s) pyrotechnique(s) à combustion vive. Les compositions pyrotechniques à combustion vive préférées sont celles qui sont utilisées dans le domaine des armes à tubes ou de la sécurité automobile. Cependant, tout autre type de compositions pyrotechniques peut être retenu. Selon une variante préférée de mise en oeuvre du procédé de l'invention, ladite(lesdites) composition(s) de la charge pyrotechnique thermo-initiable et/ou de la charge pyrotechnique additionnelle (si elle intervient) et/ou du chargement pyrotechnique (s'il intervient) ne génère(nt) pas de composés acides. Avantageusement, ladite(lesdites) composition(s) de ladite charge pyrotechnique thermo-initiable et/ou de ladite charge pyrotechnique additionnelle (si elle intervient) et/ou dudit chargement pyrotechnique (s'il intervient) est(sont) constituée(s) de :

+ 45 à 55 % en masse de nitrate de guanidine ;
+ 40 à 50 % en masse de nitrate basique de cuivre ; et
+ 0 à 5 % d'additifs ;
   - la quantité de charge(s) intervenant.

La gestion de ces paramètres permet :
- de fixer la température de thermo-initiation ;
- de maîtriser la quantité de gaz générés et la pression (de quelques bars à plusieurs centaines de bars) desdits gaz avant injection ;
- de contrôler le temps de combustion des charges pyrotechniques présentes (de quelques millisecondes à quelques secondes) et la durée de délivrance du fluide.

Selon une variante avantageuse, le procédé de l'invention est mis en oeuvre dans des contextes de sauvegarde ou de protection ou de maintenance préventive conditionnelle de systèmes susceptibles de subir des échauffements (du fait, par exemple, d'une surcharge mécanique ou électrique, d'un court-circuit, d'une friction excessive, d'une fuite de liquide de refroidissement, d'une fuite d'agent de lubrification, de l'emballement d'une réaction chimique ou électrochimique). Le fluide injecté est délivré à une température prédéterminée, c'est-à-dire lorsque la combustion d'au moins une charge pyrotechnique thermo-initiable est initiée à ladite température prédéterminée. Ledit fluide injecté, de façon autonome, est un fluide de sauvegarde ou de secours (visant à éviter la destruction d'un système), un fluide de protection (visant à maintenir opérationnel un système), un fluide de maintenance préventive conditionnelle (dans un contexte de fonctionnement aux limites de spécification), et il est délivré dans le système subissant les échauffements. En fait, les échauffements dudit système entraîne l'initiation ou l'allumage de ladite au moins une charge pyrotechnique thermo-initiable. Les gaz générés permettent alors de pressuriser et de délivrer le fluide. La liaison entre ledit système et ladite charge thermo-initiable n'est que de nature thermique. Pour la mise en oeuvre de l'allumage, ladite au moins une charge pyrotechnique thermo-initiable est avantageusement placée dans au moins un logement à conductivité thermique adaptée (adaptée au délai d'inflammation souhaité) ; ledit au moins un logement étant au contact dudit système subissant des échauffements ou intégré au moins partiellement dans celui-ci. L'homme du métier comprend qu'un réglage de la sensibilité du système peut être obtenu en jouant, non seulement sur les propriétés physiques et chimiques de la(des) charge(s) présente(s), mais aussi sur le positionnement dudit logement et/ou sur la conductivité thermique de celui-ci. De préférence, ledit logement est constitué d'un matériau à forte conductivité thermique tel que le cuivre et/ou l'aluminium.

Dans le cadre de la variante du procédé de l'invention, où au moins un chargement pyrotechnique est associé à ladite au moins une charge pyrotechnique thermo-initiable génératrice de gaz (= génératrice de gaz *per se* ou thermite associée à une charge pyrotechnique génératrice de gaz), il n'est pas exclu que ledit au moins un chargement pyrotechnique soit initié en combustion par une commande extérieure. Une telle mise en oeuvre du procédé de l'invention n'est pas *a priori* la plus courante mais elle peut se révéler opportune dans des contextes particuliers tels que, par exemple :
- avant que la température d'auto-initiation de la charge pyrotechnique thermo-initiable ne soit atteinte,
- pour une défaillance du système nécessitant l'injection du fluide et n'induisant pas d'échauffement,
- pour une maintenance après un durée de vieillissement du système,
- pour une destruction en fin de vie du dispositif d'injection.

Une telle mise en oeuvre particulière implique donc l'initiation en combustion d'un chargement pyrotechnique par une commande extérieure ; la thermo-initiation et la combustion d'au moins une charge pyrotechnique thermo-initiable génératrice de gaz suivant alors immédiatement après.

Le procédé de l'invention (avec ou sans intervention de chargement pyrotechnique) peut notamment être mis en oeuvre pour :
- l'injection d'agents de lubrification ou d'additifs de protection ou de fluides de refroidissement dans des machines; ou
- l'injection de fluides de refroidissement ou d'agents inhibiteurs de réaction dans des réacteurs ; ou
- l'injection d'additifs de protection ou de fluides de refroidissement dans des systèmes électroniques.

Les machines concernées par l'invention sont notamment les machines tournantes, plus particulièrement les roulements mécaniques.

En référence au domaine d'injection de graisses dans des roulements mécaniques, en particulier de graissage d'urgence de roulements de boîtes de vitesse de véhicules automobiles, on fournit ci-après, de façon nullement limitative, quelques précisions. La gamme de température standard de fonctionnement d'une boîte de vitesse automobile est comprise entre 30°C et 150°C. Cependant, dans des conditions d'utilisation extrême, cette gamme de température peut s'étendre de -50°C à +170°C pendant des durées limitées. Dans le cas d'une situation critique telle qu'une surcharge, une survitesse, une surtempérature, un démarrage à froid, un temps long en conditions d'utilisation extrême, une coupure d'alimentation en huile, le graissage d'urgence d'une boîte de vitesse automobile peut avantageusement être sollicité. A ce jour, aucun procédé et/ou système n'a été proposé pour répondre à ces situations d'urgence. La présente invention permet de répondre à des situations d'urgence, correspondant à une faible lubrification ou une lubrification défaillante du roulement. En effet, ces situations d'urgence entraînent une augmentation de température du roulement susceptible d'initier spontanément en combustion ladite au moins une charge pyrotechnique thermo-initiable. Avantageusement, ladite au moins une charge pyrotechnique thermo-initiable est sélectionnée, dans ce contexte, pour s'auto-initier à des températures comprises entre 170°C et 210°C ; ces températures étant supérieures à la gamme de température fonctionnelle de la boîte de vitesse. Avantageusement, pour des dispositifs de 20 mm par 40 mm de dimension (voir ci-après), quelques centaines de milligrammes à quelques grammes de matériaux pyrotechniques suffisent pour injecter 5 à 20 g de fluide lubrifiant dans un roulement mécanique subissant des échauffements.

Les applications d'injection de graisse dans des roulements ou paliers mécaniques peuvent être étendues aux domaines ferroviaire, aéronautique, notamment aux hélicoptères, et aux machines industrielles (machines rotatives, machines outils, engins de chantier...).

Selon son deuxième objet, l'invention concerne un dispositif autonome d'injection d'un fluide (convenant à la mise en oeuvre du procédé décrit ci-dessus) comprenant :
- au moins un logement à conductivité thermique adaptée, apte à recevoir au moins une charge pyrotechnique thermo-initiable génératrice de gaz de combustion (charge génératrice de gaz *per se* ou charge thermite + charge génératrice de gaz), ne comportant pas de, ni n'étant pas reliée à des, commandes d'allumage, notamment mécaniques, électriques ou radiatifs ; et
- un réservoir convenant au stockage dudit fluide non pressurisé, équipé d'au moins un moyen de délivrance dudit fluide pressurisé, par l'action, directe ou *via* un organe mobile de séparation entre ledit au moins un logement et ledit réservoir, desdits gaz de combustion.

L'originalité du dispositif pyrotechnique repose sur l'absence de commandes d'allumage. Pour assurer l'allumage, au moins une charge pyrotechnique thermo-initiable génératrice de gaz intervient donc dans au moins un logement. Le positionnement exact dudit au moins un logement à conductivité thermique adaptée et/ou la nature dudit au moins un logement (la conductivité thermique plus ou moins forte de son matériau constitutif) permet de maîtriser le temps de réponse s'écoulant entre le moment de la détection d'un échauffement anormal et le moment de l'injection dudit fluide. Avantageusement, ces paramètres sont à optimiser afin d'éviter l'injection prématurée du fluide par des pics intempestifs de température. Lesdits paramètres ainsi que la quantité totale de charge(s) pyrotechnique(s) peuvent aussi influer sur la cinématique d'injection dudit fluide.

Selon un mode de réalisation préféré du dispositif de l'invention, le réservoir convenant au stockage du fluide est composé d'un matériau à plus faible conductivité thermique que ledit au moins un logement accueillant ladite au moins une charge pyrotechnique thermo-initiable. On vise ainsi à préserver le fluide à injecter (notamment le fluide de sauvegarde, de protection ou de maintenance préventive conditionnelle) intact (à l'abri) de tout échauffement pouvant provenir des échauffements du système "à protéger". Dans cet esprit, ledit réservoir est avantageusement constitué en un matériau léger tel un plastique.

Ledit réservoir est muni d'au moins un moyen de délivrance (ayant fait office d'élément d'étanchéité). Généralement, il comprend au moins un opercule constitué d'un film plastique ou métallique frangible. Avantageusement, ledit au moins un opercule se déchire sans fragment, sous l'effort de pressurisation.

Selon un mode de réalisation particulier du dispositif de l'invention, un organe mobile de séparation est placé entre le logement et le réservoir. Un tel organe mobile n'est strictement nécessaire que si le mélange des gaz de combustion au fluide à injecter est gênant et/ou l'injection du mélange gaz de combustion/fluide à injecter pose des problèmes. Un tel organe mobile peut notamment consister en un piston coulissant ou une membrane déformable.

Avantageusement, la structure du dispositif de l'invention convient, ou inclut des moyens d'adaptation, pour une mise au contact avec, ou pour une intégration au moins partielle dans, un système susceptible de subir des échauffements. Cette structure permet au dispositif d'assurer une intervention rapide en cas d'échauffements, d'optimiser le temps de réponse dudit dispositif et de limiter la durée de sollicitation en pression et en température d'une enveloppe du système susceptible de subir des échauffements.

De plus, la structure du dispositif de l'invention permet d'assurer l'étanchéité du système et sa résistance aux sollicitations vibratoires en ne faisant intervenir que des liaisons de type thermique entre le dispositif autonome d'injection de fluide et le système à protéger susceptible de subir des échauffements. Dans un contexte d'intégration du dispositif dans un système, on peut notamment trouver ledit dispositif immergé dans un milieu liquide ; par exemple, dans le cas où le dispositif est plongé dans un réacteur chimique, ledit dispositif peut, de manière autonome, injecter un fluide caloporteur ou inhibiteur de réaction, lorsque le réacteur chimique subit des échauffements.

Selon un mode de réalisation, le dispositif comporte en outre une chambre de combustion disposée entre, et communicante (directement ou *via* l'organe mobile de séparation) avec, ledit au moins un logement et ledit réservoir, convenant à la combustion en son sein d'au moins un chargement pyrotechnique générant des gaz de combustion. Ladite chambre de combustion peut aussi contenir une charge pyrotechnique additionnelle favorisant l'allumage dudit chargement pyrotechnique. Lorsqu'un organe mobile de séparation (logement/réservoir) est présent, ledit organe est évidemment agencé entre ladite chambre de combustion et le réservoir.

De façon générale, cette chambre de combustion ne comporte pas de, ni n'est pas reliée à des, commandes d'allumage, notamment mécaniques, électriques ou radiatifs, dudit au moins un chargement pyrotechnique. Ce sont les gaz de combustion issus de ladite charge pyrotechnique thermo-initiable génératrice de gaz qui induisent l'allumage dudit chargement pyrotechnique, éventuellement par l'intermédiaire de la charge pyrotechnique additionnelle. Les gaz de combustion générés par ledit chargement pyrotechnique contribuent à la pressurisation du fluide et à son injection.

Il n'est cependant pas exclu, que dans une version particulière, la chambre de combustion comprenne un moyen de commande d'allumage dudit au moins un chargement pyrotechnique. Cette commande d'allumage peut par exemple être utilisée pour injecter le fluide dans un contexte d'anomalie ne générant pas un échauffement susceptible d'initier la charge thermo-initiable ou pour injecter le fluide pour un contexte de maintenance (voir plus haut la variante du procédé correspondante).

Selon un mode de réalisation particulier, la structure du dispositif de l'invention est celle d'une seringue. Le réservoir d'une telle seringue comporte avantageusement plusieurs orifices (pour la délivrance du fluide).

Selon son troisième objet, l'invention concerne un système susceptible de subir des échauffements auquel est associé au moins un dispositif de l'invention tel que décrit ci-dessus (dispositif autonome d'injection d'un fluide). Un tel système peut notamment être une machine, du type machine tournante, plus particulièrement un roulement mécanique ou un réacteur ou un système électronique. Un tel système peut notamment être associé à plusieurs dispositifs (de l'invention) indépendants permettant une pluralité d'injections par thermo-initiation à au moins deux températures d'échauffement différentes, en au moins un endroit dudit système susceptible de subir un échauffement.

Selon une variante de réalisation, au moins un dispositif (l'unique dispositif du système ou au moins un des dispositifs dudit système) est muni d'une chambre de combustion comprenant un chargement pyrotechnique pouvant être initié par une commande d'allumage.

On se propose maintenant de décrire, de façon nullement limitative, en référence aux figures annexées, l'invention sous ses deux aspects de procédé et de dispositif.
- La figure 1 représente une vue schématique en coupe longitudinale d'un dispositif autonome d'injection d'un fluide de l'invention, selon un premier mode de réalisation ;
- La figure 2 représente une vue schématique en coupe longitudinale d'un dispositif autonome d'injection d'un fluide, selon un deuxième mode de réalisation, implanté sur un système susceptible de subir des échauffements ;
- La figure 3 représente une vue schématique en coupe longitudinale d'un dispositif autonome d'injection d'un fluide de l'invention, selon un troisième mode de réalisation, implanté sur un système susceptible de subir des échauffements ;
- La figure 4 représente une vue schématique en coupe longitudinale d'un dispositif autonome d'injection d'un fluide de l'invention, selon un quatrième mode de réalisation, implanté sur un système susceptible de subir des échauffements ;
- La figure 5 représente une vue perspective en coupe longitudinale d'un dispositif autonome d'injection d'un fluide de l'invention, selon un cinquième mode de réalisation, implanté sur un système de roulement mécanique.

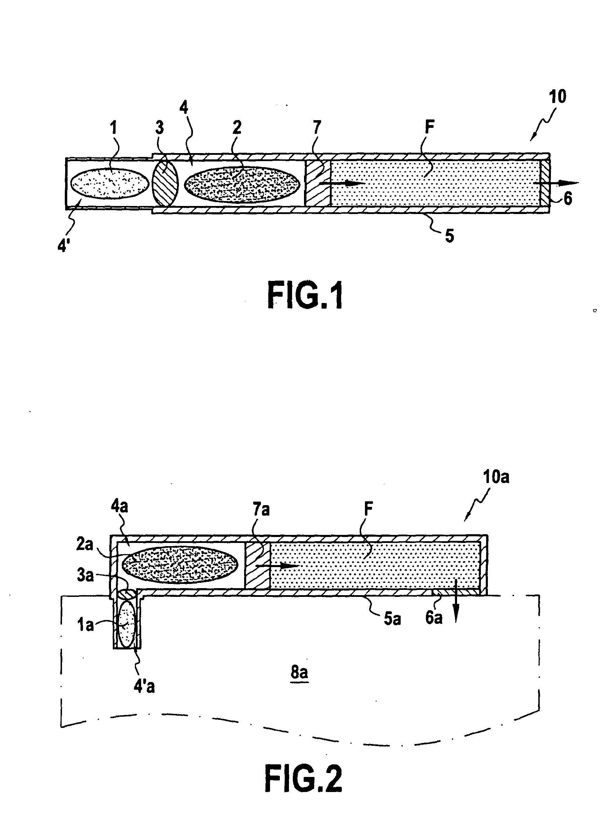

Sur les figures 1 à 5, on a donc représenté plusieurs modes de réalisation de dispositifs autonomes d'injection de fluides selon la présente invention.

Chacun des dispositifs 10 ; 10a ; 10b ; 10c ; 10d représentés comprend :
- au moins un logement 4' ; 4'a ; 4'b ; 4'c, 4'c' ; 4'd à conductivité thermique adaptée, apte à recevoir au moins une charge pyrotechnique thermo-initiable génératrice de gaz de combustion 1 ; 1a ; 1b ; 1c, 1c' ; 1d, ne comportant pas de, ni n'étant pas reliée à des, commandes d'allumage, notamment mécaniques, électriques ou radiatifs ;
- un réservoir 5 ; 5a ; 5b ; 5c ; 5d convenant au stockage d'un fluide F non pressurisé, équipé d'au moins un moyen 6 ; 6a ; 6b ; 6c ; 6d de délivrance dudit fluide F pressurisé ; et
- un organe mobile 7 ; 7a ; 7b ; 7c ; 7d de séparation entre une chambre de combustion 4 ; 4a ; 4b ; 4c (voir ci-après) ou le logement 4'd et ledit réservoir 5 ; 5a ; 5b ; 5c ; 5d, dont le déplacement sous l'action des gaz de combustion entraîne la pressurisation et la délivrance dudit fluide F.

Chacun des dispositifs 10 ; 10a ; 10b ; 10c ; 10d est déclenché par thermo-initiation : la combustion de ladite au moins une charge pyrotechnique thermo-initiable génératrice de gaz 1 ; 1a ; 1b ; 1c, 1c' ; 1d est initiée à partir d'une température donnée.

Selon la variante représentée aux figures 1 à 4, une chambre de combustion 4 ; 4a ; 4b ; 4c est donc disposée, communicante, entre ledit au moins un logement 4' ; 4'a ; 4'b ; 4'c, 4'c' et ledit organe mobile 7 ; 7a ; 7b ; 7c, convenant à la combustion en son sein d'au moins un chargement pyrotechnique 2 ; 2a ; 2b ; 2c , 2c'; ladite combustion dudit au moins un chargement pyrotechnique 2 ; 2a ; 2b ; 2c ; 2c' générant des gaz de combustion.

Selon ladite variante, la chambre 4 ; 4a ; 4b ; 4c ne comporte pas de, ni n'est pas reliée à des, commandes d'allumage, notamment mécaniques, électriques ou radiatifs, dudit au moins un chargement pyrotechnique 2+3 ;2a+3a ; 2b+3b; 2c+3c,2c'+3c' (les références 3 ; 3a ; 3b ; 3c ,3c' désignent des charges relais).

Selon une variante non représentée, la chambre (de combustion) comprend un moyen de commande d'allumage dudit au moins un chargement pyrotechnique. Dans ce cas, le dispositif peut fonctionner de façon autonome (par thermo-initiation de la charge thermo-initiable génératrice de gaz 1 ; 1a ; 1b ; 1c, 1c'), soit être déclenché au moyen d'une commande d'allumage sur ordre, par exemple, d'un capteur ou d'un chronomètre.

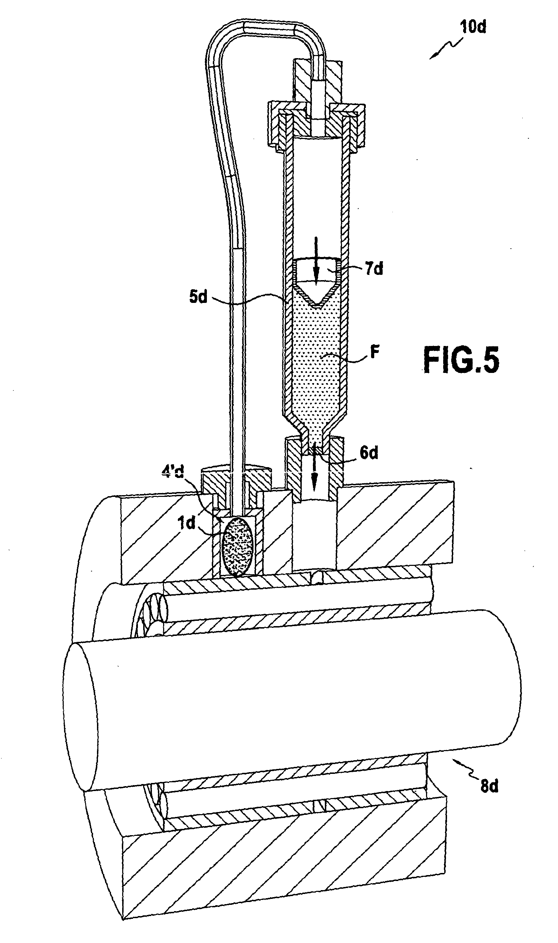

Sur les figures 1 à 4, la combustion de ladite au moins une charge pyrotechnique thermo-initiable génératrice de gaz 1 ; 1a ; 1b ; 1c, 1c' disposée dans le logement 4' ; 4'a ; 4'b ; 4'c, 4'c' permet d'allumer dans la chambre de combustion 4 ; 4a ; 4b ; 4c ; 4d au moins une charge pyrotechnique additionnelle 3 ; 3a ; 3b ; 3c, 3c' servant de relais d'allumage, qui, à son tour, déclenche la combustion d'au moins un chargement pyrotechnique 2 ; 2a ; 2b ; 2c, 2c' . Sur la figure 5, seule ladite charge pyrotechnique thermo-initiable génératrice de gaz 1d est mise en combustion dans son logement 4'd. Ladite charge pyrotechnique thermo-initiable 1d est (assurément) une charge pyrotechnique thermo-initiable génératrice de gaz.

La thermo-initiation et la combustion de ladite au moins une charge pyrotechnique thermo-initiable 1 ; 1a ; 1b ; 1c, 1c' ; 1d permet donc de générer des gaz de combustion, lesdits gaz consistant uniquement en ceux résultant de ladite combustion de ladite charge pyrotechnique thermo-initiable 1d ou consistant en ceux résultant de ladite combustion de ladite au moins une charge pyrotechnique thermo-initiable 1 ; 1a ; 1b ; 1c, 1c' et de la combustion dudit au moins un chargement pyrotechnique 2 ; 2a ; 2b ; 2c, 2c' initié en combustion par ladite au moins une charge pyrotechnique thermo-initiable 1 ; 1a ; 1b ; 1c, 1c' par l'intermédiaire de ladite au moins une charge pyrotechnique additionnelle 3 ; 3a ; 3b ; 3c, 3c'.

Les gaz, générés par la combustion, exercent une pression sur l'organe mobile 7 ; 7a ; 7b ; 7c ; 7d de séparation et pressurisent donc le fluide F à injecter, qui est délivré lorsque le moyen de délivrance 6 ; 6a ; 6b ; 6c ; 6d cède, en se déchirant, avantageusement sans fragment, sous l'effort de pressurisation. Sur les figures 1 à 5, le réservoir 5 ; 5a ; 5b ; 5c ; 5d est celui d'une seringue, l'organe mobile correspond à un piston 7 ; 7a ; 7b ; 7c ; 7d et le moyen de délivrance est constitué par un opercule 6 ; 6a ; 6b ; 6c ; 6d en film plastique ou métallique.

En référence aux figures 1 à 5, le logement 4' ; 4'a ; 4'b ; 4'c, 4'c' ; 4'd peut notamment présenter une forte conductivité thermique, du fait de la nature du matériau constitutif (par exemple le cuivre, l'aluminium) d'au moins l'une de ses parois et/ou de la faible épaisseur (par exemple, de quelques dixièmes de millimètres) d'au moins l'une de ses parois.

Les dispositifs 10a ; 10b ; 10c ; 10d montrés aux figures 2 à 5 sont implantés sur des systèmes 8a ; 8b ; 8c ; 8d susceptibles de subir des échauffements, en particulier sur un système de roulement mécanique 8d (figure 5). Ces dispositifs permettent de délivrer ou d'injecter des fluides, notamment de sauvegarde ou de protection ou de maintenance préventive conditionnelle, F dans lesdits systèmes 8a ; 8b ; 8c ; 8d et sont notamment adaptés pour procéder au graissage d'urgence de roulement de boîtes de vitesse de véhicules automobiles.

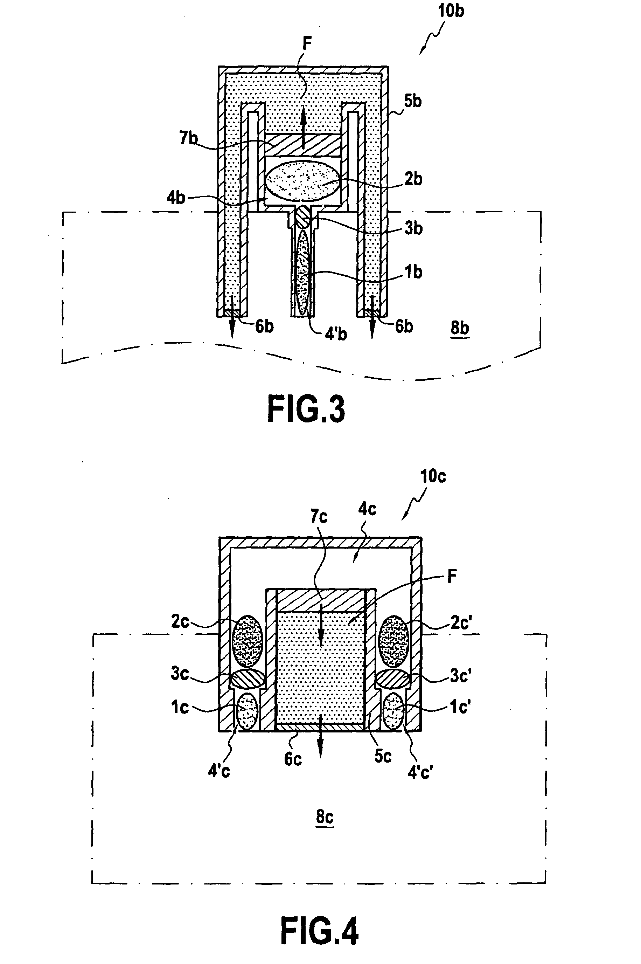

Chacun desdits dispositifs 10a ; 10b ; 10c ; 10d autonomes d'injection de fluide F présente au moins le(s) logement(s) à conductivité thermique adaptée 4'a ; 4'b ; 4'c, 4'c' ; 4'd intégré(s) dans le système 8a ; 8b ; 8c ; 8d susceptible de subir des échauffements. De plus, les réservoirs 5a ; 5d desdits dispositifs 10a ; 10d sont en contact direct (figures 2 et 5) avec lesdits systèmes susceptibles de subir des échauffements 8a ; 8d au niveau des opercules 6a ; 6d, tandis que les réservoirs 5b ; 5c sont intégrés en partie (figures 3 et 4) dans lesdits systèmes 8b ; 8c.

A la considération des figures annexées, on réalise que la chambre de combustion renferme un unique chargement pyrotechnique (variantes des figures 1, 2, 3 et 5) ou deux chargements pyrotechniques (variante de la figure 4) ; que les gaz générés peuvent pressuriser un fluide F et le délivrer en un unique endroit (variantes des figures 1, 2, 4 et 5) ou à deux endroits différents du système susceptible de subir des échauffements (variante de la figure 3).

On se propose maintenant d'illustrer l'invention, de façon nullement limitative, par l'exemple ci-après.

### EXEMPLE

On propose, en référence à la figure 5, un exemple de mise en oeuvre du procédé de l'invention. Les différents paramètres dudit procédé figurent dans le tableau ci-après.

| Dispositif employé | Figure 5 |
|---|---|
| graisse utilisée graisse utilisée | Graisses pour roulements automobiles, sidérurgie, matériels de travaux publics |
| Gamme de température | -30°C à +110°C⁽¹⁾ |
| Viscosité | 105 cSt (1,05 10⁻⁴ m²/s) |
| Volume de graisse injecté | ~ 20 mL |
| Masse de graisse injectée | ~ 20 g |
| Diamètre de l'orifice d'injection | 4 à 6 mm |
| Volume de chambre de combustion/volume de graisse | 2 |
| Quantité de matière pyrotechnique thermo-initiable | 180 mg |
| Température d'auto-inflammation | 147°C |
| Composition (% en masse) | 50% ONTA⁽²⁾, 40% GuDN⁽³⁾, 10% NG⁽⁴⁾ |
| Durée d'injection | ~ 0,3 s |
| Pression maximum d'injection | 4,3 bars |
| Délai induit par la conductivité thermique du logement (paroi en laiton de 2 mm d'épaisseur) | 4 s |

| | |
|---|---|
| (1) Tₘₐₓ = 110°C < T_{auto-inflammation} de la graisse qui est supérieure ou égale à 250°C et Tₘₐₓ = 110°C < point éclair qui est supérieur à 200°C, (2) ONTA = 3-nitro-1,2,4-triazol-5-one, (3) GuDN = guanyl urée dinitramide, (4) NG = nitrate de guanidine. | |

La température d'auto-inflammation de la composition pyrotechnique thermo-initiable génératrice de gaz est atteinte dans le logement en laiton quatre secondes plus tard que dans le roulement. Ce retard, réglable par le choix du matériau du logement et de la disposition dudit logement, permet de ne pas déclencher l'auto-initiation de la composition lors de surchauffe ponctuelle du roulement non caractéristique d'un dysfonctionnement.

## Revendications

1. Procédé d'injection autonome d'un fluide (F), **caractérisé en ce qu'**il comprend :
- la thermo-initiation et la combustion d'au moins une charge pyrotechnique thermo-initiable (1 ; 1a ; 1b ; 1c, 1c' ; 1d) génératrice de gaz;
- la génération de gaz de combustion, lesdits gaz consistant en ceux résultant de ladite combustion de ladite au moins une charge pyrotechnique thermo-initiable génératrice de gaz (1d), ou consistant en ceux résultant de ladite combustion de ladite au moins une charge pyrotechnique thermo-initiable génératrice de gaz (1 ; 1a ; 1b ; 1c, 1c') et de la combustion d'au moins un chargement pyrotechnique (2 ; 2a ; 2b ; 2c, 2c') initié en combustion par ladite au moins une charge pyrotechnique thermo-initiable (1 ; 1a ; 1b ; 1c, 1c');
- la pressurisation dudit fluide (F) sous l'action desdits gaz de combustion ;
- la délivrance dudit fluide (F) pressurisé.

2. Procédé selon la revendication 1, **caractérisé en ce que** ladite combustion de ladite au moins une charge thermo-initiable (1 ; 1a ; 1b ; 1c, 1c' ; 1d) est initiée à une température prédéterminée comprise entre 80°C et 270°C.

3. Procédé selon la revendication 1 ou 2, **caractérisé en ce que** ladite combustion dudit au moins un chargement pyrotechnique (2 ; 2a ; 2b ; 2c, 2c') est initiée par ladite au moins une charge pyrotechnique thermo-initiable (1 ; 1a ; 1b ; 1c, 1c') *via* au moins une charge pyrotechnique additionnelle (3 ; 3a ; 3b ; 3c, 3c').

4. Procédé selon l'une quelconque des revendications 1 à 3, **caractérisé en ce que** ledit fluide (F) est un fluide de sauvegarde, de protection ou de maintenance préventive conditionnelle et **en ce qu'**il est délivré dans un système (8a ; 8b ; 8c ; 8d) subissant des échauffements.

5. Procédé selon la revendication 4, **caractérisé en ce que** ladite combustion de ladite au moins une charge pyrotechnique thermo-initiable (1a ; 1b ; 1c, 1c' ; 1d) est mise en oeuvre dans au moins un logement (4'a ; 4'b ; 4'c, 4'c' ; 4'd) à conductivité thermique adaptée ; ledit au moins un logement (4'a ; 4'b ; 4'c, 4'c' ; 4'd) étant au contact dudit système (8a ; 8b ; 8c ; 8d) subissant des échauffements ou intégré au moins partiellement dans celui-ci.

6. Procédé selon l'une quelconque des revendications 1 à 5, **caractérisé en ce qu'**il comprend l'initiation du au moins un chargement pyrotechnique au moyen d'une commande extérieure.

7. Procédé selon l'une quelconque des revendications 1 à 6, **caractérisé en ce qu'**il est mis en oeuvre pour:
- l'injection d'agents de lubrification ou d'additifs de protection ou de fluides de refroidissement dans des machines; ou
- l'injection de fluides de refroidissement ou d'agents inhibiteurs de réaction dans des réacteurs ; ou
- l'injection d'additifs de protection ou de fluides de refroidissement dans des systèmes électroniques.

8. Dispositif (10 ; 10a ; 10b ; 10c ; 10d) autonome d'injection d'un fluide (F), **caractérisé en ce que** sa structure comprend :
- au moins un logement (4' ; 4'a ; 4'b ; 4'c, 4'c' ; 4'd) à conductivité thermique adaptée, dans lequel est reçu au moins une charge pyrotechnique thermo-initiable génératrice de gaz de combustion (1 ; 1a ; 1b ; 1c, 1c' ; 1d), ne comportant pas de, ni n'étant pas reliée à des, commandes d'allumage, notamment mécaniques, électriques ou radiatifs,
- un réservoir (5 ; 5a ; 5b ; 5c ; 5d) contenant ledit fluide (F) non pressurisé, équipé d'au moins un moyen (6 ; 6a ; 6b ; 6c ; 6d) de délivrance dudit fluide (F) pressurisé, par l'action, directe ou *via* un organe mobile (7 ; 7a ; 7b ; 7c ; 7d) de séparation entre ledit au moins un logement (4' ; 4'a ; 4'b ; 4'c, 4'c' ; 4'd) et ledit réservoir (5 ; 5a ; 5b ; 5c ; 5d), desdits gaz de combustion.

9. Dispositif (10a ; 10b ; 10c ; 10d) selon la revendication 8, **caractérisé en ce que** sa structure convient, ou inclut des moyens d'adaptation, pour une mise au contact avec, ou pour une intégration au moins partielle dans, un système (8a ; 8b ; 8c ; 8d) susceptible de subir des échauffements.

10. Dispositif (10 ; 10a ; 10b ; 10c) selon la revendication 8 ou 9, **caractérisé en ce qu'**il comporte en outre une chambre de combustion (4 ; 4a ; 4b ; 4c ), disposée entre ledit au moins logement (4' ; 4'a ; 4'b ; 4'c, 4'c') et ledit réservoir (5 ; 5a ; 5b ; 5c), communicante avec ledit au moins un logement (4' ; 4'a ; 4'b ; 4'c, 4'c') et ledit réservoir (5 ; 5a ; 5b ; 5c), convenant à la combustion en son sein d'au moins un chargement pyrotechnique (2+3 ; 2a+3a ; 2b+3b ; 2c+3c, 2c'+3c') ; ladite combustion dudit au moins un chargement pyrotechnique (2+3 ; 2a+3a ; 2b+3b ; 2c+3c, 2c'+3c') générant des gaz de combustion.

11. Dispositif (10 ; 10a ; 10b ; 10c) selon la revendication 10, **caractérisé en ce que** ladite chambre de combustion (4 ; 4a ; 4b ; 4c ) ne comporte pas de, ni n'est pas reliée à des, commandes d'allumage, notamment mécaniques, électriques ou radiatifs, dudit au moins un chargement pyrotechnique (2+3 ;2a+3a ; 2b+3b; 2c+3c,2c'+3c')

12. Dispositif selon la revendication 10, **caractérisé en ce que** ladite chambre de combustion comprend un moyen de commande d'allumage dudit au moins un chargement pyrotechnique.

13. Dispositif (10 ; 10a ; 10b ; 10c ; 10d) selon l'une quelconque des revendications 8 à 12, **caractérisé en ce que** sa structure est celle d'une seringue.

14. Système (8a ; 8b ; 8c ; 8d) susceptible de subir des échauffements, **caractérisé en ce qu'**il lui est associé au moins un dispositif (10a ; 10b ; 10c ; 10d) selon l'une quelconque des revendications 8 à 13.

15. Système (8a ; 8b ; 8c ; 8d) selon la revendication 14, **caractérisé en ce qu'**il lui est associé au moins deux dispositifs (10a ; 10b ; 10c ; 10d) selon l'une quelconque des revendications 8 à 13 permettant au moins deux injections par thermo-initiation à au moins deux températures d'échauffement différentes, en au moins un endroit dudit système (8a ; 8b ; 8c ; 8d) susceptible de subir un échauffement.

16. Système (8a ; 8b ; 8c ; 8d) selon la revendication 14 ou 15, **caractérisé en ce qu'**au moins un dispositif est muni d'une chambre de combustion comprenant un chargement pyrotechnique pouvant être initiée par une commande d'allumage.

## Claims

1. A method for the autonomous injection of a fluid (F), **characterized in that** it comprises:
- the thermal initiation and the combustion of at least one thermally initiatable gas-generating pyrotechnic charge (1; 1a; 1b; 1c, 1c'; 1d);
- the generation of combustion gases, said gases consisting of those resulting from said combustion of said at least one thermally initiatable gas-generating pyrotechnic charge (1d), or consisting of those resulting from said combustion of said at least one thermally initiatable gas-generating pyrotechnic charge (1; 1a; 1b; 1c, 1c') and the combustion of at least one combustion-initiated pyrotechnic charge (2; 2a; 2b; 2c, 2c') combustion-initiated by said at least one thermally initiatable pyrotechnic charge (1; 1a; 1b, 1c, 1c');
- the pressurization of said fluid (F) under the action of said combustion gases; and
- the delivery of said pressurized fluid (F).

2. The method according to claim 1, **characterized in that** said combustion of said at least one thermally initiatable charge (1; 1a; 1b; 1c, 1c'; 1d) is initiated at a predetermined temperature of between 80°C and 270°C.

3. The method according to claim 1 or claim 2, **characterized in that** said combustion of said at least one combustion-initiated pyrotechnic charge (2; 2a; 2b; 2c, 2c') is initiated by said at least one thermally initiatable pyrotechnic charge (1; 1a; 1b; 1c, 1c') via at least one additional pyrotechnic charge (3; 3a; 3b; 3c, 3c').

4. The method according to any one of claims 1 to 3, **characterized in that** said fluid (F) is a safeguarding, protective or conditional preventive-maintenance fluid and **in that** it is delivered into a system (8a; 8b; 8c; 8d) subject to overheating.

5. The method according to claim 4, **characterized in that** said combustion of said at least one thermally initiatable pyrotechnic charge (1a; 1b; 1c, 1c'; 1d) is carried out in at least one housing (4'a; 4'b; 4'c, 4'c'; 4'd) of suitable thermal conductivity; said at least one housing (4'a; 4'b; 4'c, 4'c'; 4'd) being in contact with said system (8a; 8b; 8c; 8d) subject to overheating or being at least partially integrated into the latter.

6. The method according to any one of claims 1 to 5, **characterized in that** it includes the initiation of the at least one pyrotechnic charge by means of an external control.

7. The method according to any one of claims 1 to 6, **characterized in that** it is carried out for:
- the injection of lubricants or protective additives or coolants into machines; or
- the injection of coolants or reaction inhibitors into reactors; or
- the injection of protective additives or coolants into electronic systems.

8. A autonomous device (10a; 10b; 10c; 10d) for the injection of a fluid (F), **characterized in that** its structure comprises:
- at least one housing (4'; 4'a; 4'b; 4'c, 4'c'; 4'd) of suitable thermal conductivity, in which is accommodated at least one thermally initiatable combustion-gas-generating pyrotechnic charge (1; 1a; 1b; 1c, 1c'; 1d) which neither includes, nor is connected to, ignition controls, especially mechanical, electrical or radiative controls; and
- a reservoir (5; 5a; 5b; 5c; 5d) containing said unpressurized fluid (F), equipped with at least one means (6; 6a; 6b; 6c; 6d) for delivering said pressurized fluid (F) through the action, directly or via a movable separating member (7; 7a; 7b; 7c; 7d) between said at least one housing (4'; 4'a; 4'b; 4'c, 4'c'; 4'd) and said reservoir (5; 5a; 5b; 5c; 5d), of said combustion gases.

9. The device (10a; 10b; 10c; 10d) according to claim 8, **characterized in that** its structure is suitable, or includes adapting means, for contacting with or for at least partially integrating into a system (8a; 8b; 8c; 8d) liable to be subject to overheating.

10. The device (10; 10a; 10b; 10c) according to claim 8 or claim 9, **characterized in that** it further includes a combustion chamber (4; 4a; 4b; 4c), placed between said at least one housing (4'; 4'a; 4'b; 4'c, 4'c') and said reservoir (5; 5a; 5b; 5c) and communicating with said at least one housing (4'; 4'a; 4'b; 4'c, 4'c') and said reservoir (5; 5a; 5b; 5c), suitable for combustion within it of at least one pyrotechnic charge (2+3; 2a+3a; 2b+3b; 2c+3c, 2c'+3c'); said combustion of said at least one pyrotechnic charge (2+3; 2a+3a; 2b+3b; 2c+3c, 2c'+3c') generating combustion gases.

11. The device (10; 10a; 10b; 10c) according to claim 10, **characterized in that** said combustion chamber (4; 4a; 4b; 4c) neither includes, nor is connected to, ignition controls, especially mechanical, electrical or radiative controls, for igniting said at least one pyrotechnic charge (2+3; 2a+3a; 2b+3b; 2c+3c, 2c'+3c').

12. The device according to claim 10, **characterized in that** said combustion chamber includes a means for controlling the ignition of said at least one pyrotechnic charge.

13. The device (10; 10a; 10b; 10c; 10d) according to any one of claims 8 to 12, **characterized in that** its structure is that of a syringe.

14. A system (8a; 8b; 8c; 8d) liable to be subject to overheating, **characterized in that** associated with it is at least one device (10a; 10b; 10c; 10d) according to any one of claims 8 to 13.

15. The system (8a; 8b; 8c; 8d) according to claim 14, **characterized in that** associated with it are at least two devices (10a; 10b; 10c; 10d) according to any one of claims 8 to 13 enabling at least two injections to be carried out by thermal initiation at at least two different overheating temperatures, in at least one place in said system (8a; 8b; 8c; 8d) liable to be subject to overheating.

16. A system (8a; 8b; 8c; 8d) according to claim 14 or claim 15, **characterized in that** at least one device is provided with a combustion chamber that includes a pyrotechnic charge that can be initiated by an ignition control.

## Patentansprüche

1. Verfahren zum unabhängigen Einspritzen eines Fluids (F), **dadurch gekennzeichnet, daß** es umfaßt:
- die thermische Initiierung und die Verbrennung wenigstens einer thermisch initiierbaren, gaserzeugenden pyrotechnischen Ladung (1; 1a; 1b; 1c, 4c'; 1d),
- die Erzeugung von Verbrennungsgasen, wobei die Gase aus denjenigen bestehen, die aus der Verbrennung der wenigstens einen thermisch initiierbaren, gaserzeugenden pyrotechnischen Ladung (1 d) hervorgehen, oder aus denjenigen bestehen, die aus der Verbrennung der wenigstens einen thermisch initiierbaren, gaserzeugenden pyrotechnischen Ladung (1; 1 a; 1b; 1 c, 1c') und aus der Verbrennung wenigstens einer pyrotechnischen Ladung (2; 2a; 2b; 2c, 2c'), deren Verbrennung durch die wenigstens eine thermisch initiierbare pyrotechnische Ladung (1; 1 a; 1b; 1 c, 1c') eingeleitet wird, hervorgehen,
- die Druckbeaufschlagung des Fluids (F) unter der Wirkung der Verbrennungsgase,
- die Lieferung des druckbeaufschlagten Fluids (F).

2. Verfahren nach Anspruch 1, **dadurch gekennzeichnet, daß** die Verbrennung der wenigstens einen thermisch initiierbaren Ladung (1; 1 a; 1 b; 1 c, 1 c'; 1 d) bei einer vorbestimmten Temperatur im Bereich zwischen 80 °C und 270 °C eingeleitet wird.

3. Verfahren nach Anspruch 1 oder 2, **dadurch gekennzeichnet, daß** die Verbrennung der wenigstens einen pyrotechnischen Ladung (2; 2a; 2b; 2c, 2c') durch die wenigstens eine thermisch initiierbare pyrotechnische Ladung (1; 1a; 1 b; 1c, 1c') über wenigstens eine zusätzliche pyrotechnische Ladung (3; 3a; 3b; 3c, 3c') eingeleitet wird.

4. Verfahren nach einem der Ansprüche 1 bis 3, **dadurch gekennzeichnet, daß** das Fluid (F) ein Fluid zur Rettung, zum Schutz oder zur vorbeugenden zustandsorientierten Instandhaltung ist und daß es in ein Erwärmungen ausgesetztes System (8a; 8b; 8c; 8d) geliefert wird.

5. Verfahren nach Anspruch 4, **dadurch gekennzeichnet, daß** die Verbrennung der wenigstens einen thermisch initiierbaren pyrotechnischen Ladung (1 a; 1 b; 1 c, 1c'; 1d) in wenigstens einer Aufnahme (4'a; 4'b; 4'c, 4'c'; 4'd) mit angepaßter Wärmeleitfähigkeit vollzogen wird, wobei die wenigstens eine Aufnahme (4'a; 4'b; 4'c, 4'c'; 4'd) mit dem Erwärmungen ausgesetzten System (8a; 8b; 8c; 8d) in Kontakt ist oder wenigstens teilweise in dieses integriert ist.

6. Verfahren nach einem der Ansprüche 1 bis 5, **dadurch gekennzeichnet, daß** es die Initiierung der wenigstens einen pyrotechnischen Ladung mittels einer externen Steuerung umfaßt.

7. Verfahren nach einem der Ansprüche 1 bis 6, **dadurch gekennzeichnet, daß** es durchgeführt wird für:
- das Einspritzen von Schmiermitteln oder von Schutzadditiven oder von Kühlmitteln in Maschinen oder
- das Einspritzen von Kühlmitteln oder von Reaktionsinhibitoren in Reaktoren oder
- das Einspritzen von Schutzadditiven oder von Kühlmitteln in elektronischen Systemen.

8. Unabhängige Vorrichtung (10; 10a; 10b; 10c; 10d) zum Einspritzen eines Fluids (F), **dadurch gekennzeichnet, daß** ihre Struktur umfaßt:
- wenigstens eine Aufnahme (4'; 4'a; 4'b; 4'c, 4'c'; 4'd) mit angepaßter Wärmeleitfähigkeit, in der wenigstens eine thermisch initiierbare, verbrennungsgaserzeugende pyrotechnische Ladung (1; 1a; 1b; 1c, 1c'; 1d) aufgenommen ist, die keine Zündsteuerungen, insbesondere mechanische, elektrische oder strahlungstechnische, umfaßt, noch damit verbunden ist,
- einen das nicht druckbeaufschlagte Fluid (F) enthaltenden Behälter (5; 5a; 5b; 5c; 5d), der mit wenigstens einem Mittel (6; 6a; 6b; 6c; 6d) zur Lieferung des druckbeaufschlagten Fluids (F) durch die Wirkung - die direkte Wirkung oder über ein bewegliches Trennorgan (7; 7a; 7b; 7c; 7d) zwischen der wenigstens einen Aufnahme (4'; 4'a; 4'b; 4'c, 4'c'; 4d) und dem Behälter (5; 5a; 5b; 5c; 5d) - der Verbrennungsgase ausgestattet ist.

9. Vorrichtung (10a; 10b; 10c; 10d) nach Anspruch 8, **dadurch gekennzeichnet, daß** ihre Struktur geeignet ist oder Anpassungsmittel enthält für ein Inkontaktbringen mit einem oder für ein wenigstens teilweises Integrieren in ein System (8a; 8b; 8c; 8d), das geeignet ist, Erwärmungen zu erfahren.

10. Vorrichtung (10; 10a; 10b; 10c) nach Anspruch 8 oder 9, **dadurch gekennzeichnet, daß** sie ferner eine zwischen der wenigstens einen Aufnahme (4'; 4'a, 4'b; 4'c, 4'c') und dem Behälter (5; 5a; 5b; 5c) angeordnete, mit der wenigstens einen Aufnahme (4'; 4'a, 4'b; 4'c, 4'c') und dem Behälter (5; 5a; 5b; 5c) in Verbindung stehende Brennkammer (4; 4a; 4b; 4c) umfaßt, die für die Verbrennung wenigstens einer pyrotechnischen Ladung (2+3; 2a+3a; 2b+3b; 2c+3c, 2c'+3c') in ihr geeignet ist, wobei die Verbrennung der wenigstens einen pyrotechnischen Ladung (2+3; 2a+3a; 2b+3b; 2c+3c, 2c'+3c') Verbrennungsgase erzeugt.

11. Vorrichtung (10; 10a; 10b; 10c) nach Anspruch 10, **dadurch gekennzeichnet, daß** die Brennkammer (4; 4a; 4b; 4c) keine Steuerungen, insbesondere mechanische, elektrische oder strahlungstechnische, zum Zünden der wenigstens einen pyrotechnischen Ladung (2+3; 2a+3a; 2b+3b; 2c+3c, 2c'+3c') umfaßt, noch damit verbunden ist.

12. Vorrichtung nach Anspruch 10, **dadurch gekennzeichnet, daß** die Brennkammer ein Mittel zur Zündsteuerung der wenigstens einen pyrotechnischen Ladung umfaßt.

13. Vorrichtung (10; 10a; 10b; 10c; 10d) nach einem der Ansprüche 8 bis 12, **dadurch gekennzeichnet, daß** ihre Struktur die einer Spritze ist.

14. System (8a; 8b; 8c; 8d), das geeignet ist, Erwärmungen zu erfahren, **dadurch gekennzeichnet, daß** ihm wenigstens eine Vorrichtung (10a; 10b; 10c; 10d) nach einem der Ansprüche 8 bis 13 zugeordnet ist.

15. System (8a; 8b; 8c; 8d) nach Anspruch 14; **dadurch gekennzeichnet, daß** ihm wenigstens zwei Vorrichtungen (10a; 10b; 10c; 10d) nach einem der Ansprüche 8 bis 13 zugeordnet sind, die wenigstens zwei Einspritzungen mittels thermischer Initiierung bei wenigstens zwei unterschiedlichen Erwärmungstemperaturen, an wenigstens einer Stelle des Systems (8a; 8b; 8c; 8d), das geeignet ist, eine Erwärmung zu erfahren, ermöglichen.

16. System (8a; 8b; 8c; 8d) nach Anspruch 14 oder 15, **dadurch gekennzeichnet, daß** wenigstens eine Vorrichtung mit einer Brennkammer ausgestattet ist, die eine durch eine Zündsteuerung initiierbare pyrotechnische Ladung umfaßt.
